# FASCICULE DE BREVET EUROPEEN

(11) **EP 3 051 675 B1**
(45) Date de publication et mention de la délivrance du brevet: **13.11.2024**
(21) Numéro de dépôt: 15305089.3
(22) Date de dépôt: 27.01.2015
(51) Int. Cl.: H02K 17/16

(54) **ROTOR À CAGE D'ÉCUREUIL ET MOTEUR ASYNCHRONE COMPORTANT UN TEL ROTOR**
KURZSCHLUSSLÄUFER UND ASYNCHRONMOTOR MIT DERARTIGEN ROTOR
SQUIRREL-CAGE ROTOR AND ASYNCHRONUOUS MOTOR COMPRISING SUCH A ROTOR

(43) Date de publication de la demande: 03.08.2016
(73) Titulaire: GE Energy Power Conversion Technology Ltd, Rugby, Warwickshire CV21 1BD (GB)
(72) Inventeur: Galmiche, Christophe, 54200 Toul (FR); Humbert, Pierre, 57170 Gremecey (FR); Klinger, Christophe, 54000 Nancy (FR)
(74) Mandataire: Casalonga

(56) Documents cités:
- EP-A1- 0 546 197
- EP-A1- 0 608 675
- EP-A1- 2 615 726
- GB-A- 268 355
- JP-A- S 631 352

## Description

La présente invention concerne un rotor de machine électrique, s'étendant selon un axe de rotation et comprenant une cage de court-circuit ayant au moins une barre et au moins une première couronne de court-circuit électrique, la ou chaque barre ayant une première partie d'extrémité, la première partie d'extrémité étant liée à la première couronne de court-circuit électriquement par un premier moyen de liaison et radialement par rapport à l'axe de rotation.

La présente invention concerne également une machine électrique, en particulier une machine asynchrone, notamment un moteur, comprenant un stator et un tel rotor.

On connaît un rotor du type précité des documents EP 0 628 675 A1, GB 268355 A, EP 0546197 A1, EP2615726 A1, JP 5631352 A, EP0608675 A1

Le rotor comprend une masse magnétique s'étendant selon l'axe de rotation et une cage de court-circuit. La cage de court-circuit comprend deux couronnes de court-circuit placées de part et d'autre de la masse magnétique suivant l'axe de rotation et une pluralité de barres rondes, électriquement conductrices, destinées à relier électriquement les deux couronnes de court-circuit.

Les extrémités des barres rondes ou rectangulaires sont disposées flexiblement ou capables de dilater librement dans des orifices adaptés aux barres et ménagés dans les couronnes de court-circuit.

Parfois, la libre disposition des extrémités des barres dans les orifices ménagés dans les couronnes de court-circuit ne permet pas de garantir des contacts électriques dans toutes les conditions d'utilisation, notamment pour des faibles vitesses de rotation du rotor, où la force centrifuge n'est pas suffisante pour assurer une pression de contact entre extrémités de barres et couronnes de court-circuit permettant le passage de courant électrique sans étincelage et sans échauffement excessif.

Le but de l'invention est donc de proposer un rotor de machine électrique permettant d'améliorer le contact électrique entre les barres et les couronnes de la cage de court-circuit.

À cet effet, l'invention a pour objet un rotor du type précité, dans lequel la liaison entre les barres et les couronnes est créé tel que définie à la revendication 1. Dans les revendications dépendantes, les caractéristiques suivantes sont définies:- les lamelles flexibles d'un moyen de liaison respectif sont disposées le long d'au moins trois-quarts de la périphérie suivant le plan transversal d'une première partie d'extrémité, de préférence encore le long de sensiblement toute la périphérie suivant le plan transversal de ladite partie d'extrémité ;
- chaque lamelle flexible est mobile en rotation autour d'un axe de pivot sensiblement parallèle à l'axe de rotation ;
- les lamelles flexibles d'un moyen de liaison respectif sont réparties en un premier ensemble et un deuxième ensemble, les lamelles du premier ensemble étant reliées entre elles par une première bande de maintien et les lamelles du deuxième ensemble étant reliées entre elles par une deuxième bande de maintien ;
- les lamelles du premier ensemble sont mobiles en rotation autour de leur axe de pivot selon un premier sens, et les lamelles du deuxième ensemble sont mobiles en rotation autour de leur axe de pivot selon un deuxième sens opposé au premier sens ;
- au moins un moyen de liaison comporte une douille et au moins deux groupes de lamelles flexibles, électriquement conductrices et solidaires de la douille, au moins un premier groupe de lamelles étant reçu à la périphérie extérieure de la douille et en appui contre la couronne de court-circuit respective, et au moins un deuxième groupe de lamelles étant reçu à la périphérie intérieure de la douille et en appui contre la partie d'extrémité respective de la barre correspondante ;
- les lamelles flexibles d'un moyen de liaison respectif sont reçues dans un évidement agencé dans la couronne de court-circuit respective et en appui contre la partie d'extrémité respective de la barre correspondante ;
- les lamelles flexibles d'un moyen de liaison respectif sont reçues dans un évidement agencé dans la partie d'extrémité respective de la barre correspondante et en appui contre la couronne de court-circuit respective.

L'invention a également pour objet une machine électrique asynchrone, notamment moteur, comprenant un stator et un rotor tel que défini ci-dessus.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique en coupe axiale d'une machine électrique selon l'invention ; la machine comportant un stator et un rotor, le rotor comportant une cage de court-circuit ayant une pluralité de barres conductrices, deux couronnes de court-circuit et des lamelles flexibles agencées entre les extrémités de chaque barre respective et la couronne de court-circuit correspondante,
- la figure 2 est un agrandissement de la zone encadrée II de la figure 1 ;
- la figure 3 est une vue schématique et en coupe selon le plan III de la figure 2 ;
- la figure 4 est une vue analogue à celle de la figure 3 selon une variante de réalisation ;
- la figure 5 est une vue analogue à celle de la figure 2 selon un deuxième mode de réalisation de l'invention ; et
- la figure 6 est une vue analogue à celle de la figure 2 selon un troisième mode de réalisation de l'invention.

De façon conventionnelle dans la présente demande, l'expression « sensiblement égal à » exprimera une relation d'égalité à plus ou moins 5%.

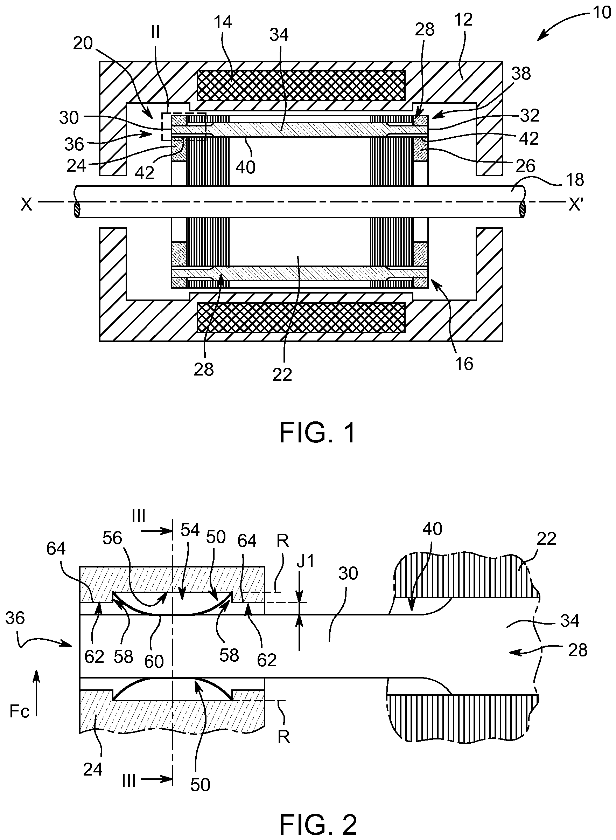

Sur la figure 1 est représentée une machine électrique selon l'invention, désignée par la référence générale 10. La machine électrique 10 est, de préférence, une machine asynchrone, notamment un moteur asynchrone.

La machine 10 comprend une carcasse 12, un stator 14, un rotor 16 et un arbre 18.

La machine 10 est adaptée pour fonctionner à des très hautes vitesses, par exemple des vitesses allant de 3 000 tours par minute à 20 000 tours par minute. La machine 10 présente une forte puissance électrique, par exemple supérieure à 10 Mégawatts (MW), de préférence supérieure à 50 MW.

La carcasse 12 et le stator 14 sont des éléments connus, et ne sont donc pas décrits plus en détail.

Le rotor 16 s'étend selon un axe de rotation X-X' également appelé axe longitudinal. Dans ce qui suit, les expressions « axialement », « radialement » et « circonférentiellement » seront utilisées par rapport à l'axe X-X'.

Le rotor 16 est solidaire de l'arbre 18, et comprend une cage de court-circuit 20 et une masse magnétique 22.

Le rotor 16 est un rotor de masse importante, par exemple supérieure à 1000 kilogrammes (kg), de préférence supérieure à 10 000 kilogrammes (kg).

La cage de court-circuit 20 comprend une première couronne de court-circuit 24 électrique et une seconde couronne de court-circuit 26 électrique. La cage de court-circuit 20 comprend une pluralité de barres électriquement conductrices 28 destinées à relier électriquement les deux couronnes de court-circuit 24, 26, chaque barre 28 comportant une première partie d'extrémité 30, une seconde partie d'extrémité 32 et une partie médiane 34 s'étendant entre les parties d'extrémités 30, 32.

La cage de court-circuit 20 comprend, pour chaque barre conductrice 28, un premier moyen de liaison 36 disposé entre la première partie d'extrémité 30 et la première couronne de court-circuit 24, afin de relier électriquement la première partie d'extrémité 30 à la première couronne de court-circuit 24 radialement par rapport à l'axe de rotation X-X'.

En complément, la cage de court-circuit 20 comprend, pour chaque barre conductrice 28, un second moyen de liaison 38 disposé entre la seconde partie d'extrémité 32 et la seconde couronne de court-circuit 26, afin de relier électriquement la seconde partie d'extrémité 32 à la seconde couronne de court-circuit 26 radialement par rapport à l'axe de rotation X-X'.

La masse magnétique 22 comporte un empilement de tôles rotoriques et un dispositif, non représenté, de maintien de l'empilement. La masse magnétique 22 s'étend selon l'axe longitudinal X-X', et est délimitée par une périphérie.

La masse magnétique 22 comporte une pluralité de logements 40 de barre 28.

La première couronne de court-circuit 24 et la seconde couronne de court-circuit 26 sont identiques, ou sensiblement identiques.

Chaque couronne de court-circuit 24, 26 est un disque circulaire disposé coaxialement à l'axe de rotation X-X'. La première couronne de court-circuit 24 est disposée d'un côté axial de la masse magnétique 22 tandis que la seconde couronne de court-circuit 26 est disposée de l'autre côté axial de la masse magnétique 22.

Chaque couronne de court-circuit 24, 26 est fixée axialement par rapport à la masse magnétique 22 ou par rapport à l'arbre 18. Chaque couronne de court-circuit 24, 26 est, par exemple, frettée sur l'arbre 18 ou fixée à la masse magnétique 22. En variante, la couronne de court-circuit 24, 26 est fixée à toute autre pièce intermédiaire solidaire de l'arbre 18 ou de la masse magnétique 22.

Chaque couronne de court-circuit 24, 26 est, par exemple, fabriquée en métal, de préférence fabriquée en cuivre. De préférence, chaque couronne de court-circuit 24, 26 est fabriquée d'un seul tenant, notamment d'une seule pièce.

Chaque couronne de court-circuit 24, 26 est munie d'une pluralité de cavités axiales 42. Chaque cavité axiale 42 est propre à recevoir une barre 28 respective.

Chaque barre 28 est fabriquée d'un seul tenant, et notamment d'une seule pièce. Les barres 28 sont, par exemple, fabriquées en métal, tel que du cuivre.

Les barres 28 sont disposées parallèlement à l'axe de rotation X-X'. En outre, la partie médiane 34 des barres a, par exemple, une section circulaire ou, en variante, une section rectangulaire ou sensiblement rectangulaire.

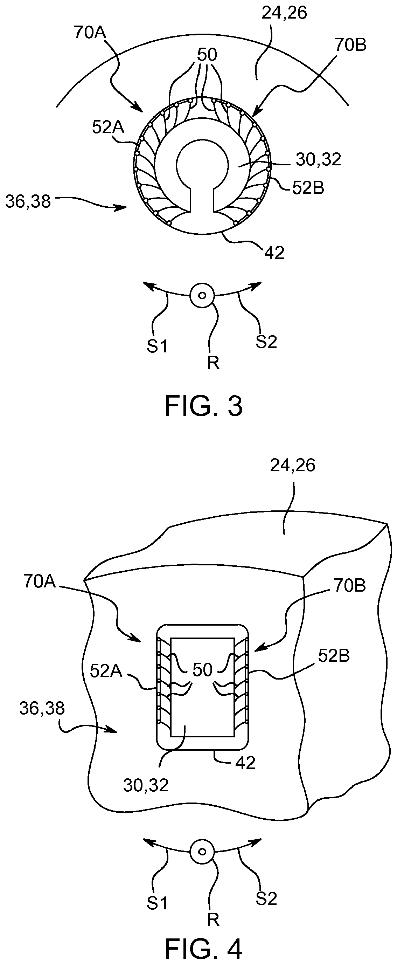

Les parties d'extrémité 30, 32 de la barre conductrice présentent, par exemple, une section sensiblement circulaire (figure 3) dans un plan transversal, perpendiculaire à l'axe de rotation X-X'. En variante, les parties d'extrémité 30, 32 de la barre conductrice présentent une section sensiblement rectangulaire (figure 4) dans le plan transversal. En variante encore, non représentés, les parties extrémité 30, 32 de la barre conductrice présentent une section trapézoïdale dans ledit plan transversal.

Chaque premier moyen de liaison 36 comporte une pluralité de lamelles flexibles 50 électriquement conductrices, comme représenté sur la figure 2.

En complément, chaque second moyen de liaison 38 comporte également une pluralité de lamelles flexibles 50 électriquement conductrices.

Sur la figure 2, seuls la première couronne de court-circuit 24, la première partie d'extrémité 30 d'une barre conductrice donnée et le premier moyen de liaison 36 correspondant ont été représentés par souci de simplification, et l'homme du métier comprendra que l'agencement de la seconde couronne de court-circuit 26, de la seconde partie d'extrémité 32 et du second moyen de liaison 38 correspondant est analogue à celui de la première couronne de court-circuit 24, la première partie d'extrémité 30 et du premier moyen de liaison 36, visible sur la figure 2.

Les lamelles flexibles 50 d'un moyen de liaison 36, 38 respectif sont disposées le long d'au moins la moitié de la périphérie, selon le plan transversal perpendiculaire à l'axe de rotation X-X', de la partie d'extrémité 30, 32 correspondante. Dans l'exemple de la figure 3, les lamelles flexibles 50 d'un moyen de liaison 36, 38 respectif sont disposées le long de sensiblement toute la périphérie de ladite partie d'extrémité 30, 32.

Chaque lamelle flexible 50 est de préférence mobile en rotation autour d'un axe de pivot R, visible sur la figure 2 et sensiblement parallèle à l'axe de rotation X-X'.

Les lamelles 50 d'un moyen de liaison 36, 38 respectif sont, par exemple, toutes mobiles en rotation autour de leur axe de pivot R selon un même sens lorsqu'elles sont pressées entre la partie d'extrémité 30, 32 de la barre conductrice et la couronne de court-circuit 24, 26 correspondantes. En variante, comme cela sera décrit par la suite plus en détail en regard des figures 3 et 4, les lamelles 50 d'un moyen de liaison 36, 38 respectif sont réparties en plusieurs ensembles avec des sens de rotation autour de leur axe de pivot R distincts d'un ensemble à l'autre.

Les lamelles flexibles 50 d'un moyen de liaison 36, 38 respectif sont, par exemple, mécaniquement et électriquement reliées entre elles par une bande de maintien 52, comme représenté sur les figures 3 et 4.

Les lamelles flexibles 50 sont, par exemple, sensiblement en forme de V. Les lamelles flexibles 50 sont réalisées de préférence en cuivre, et la bande de maintien 52 est, par exemple, réalisée en acier ou en cuivre.

Chaque lamelle 50 présente, par exemple, un encombrement de 10 mm suivant l'axe R, et est alors propre à permettre la circulation d'un courant de 50 A.

Dans l'exemple de réalisation de la figure 2, les lamelles flexibles 50 d'un moyen de liaison 36, 38 respectif sont reçues dans un évidement 54 agencé dans la couronne de court-circuit 24, 26 respective et en appui contre la partie d'extrémité 30, 32 respective de la barre correspondante. L'évidement 54 comporte un fond 56 et deux parois radiales 58. Les lamelles flexibles 50 sont maintenues dans l'évidement 54 par exemple avec précontrainte en s'appliquant sur les parois radiales 58. A l'état non sollicité des lamelles 50, celles-ci comportent une partie centrale 60 qui s'étend en dehors de l'évidement 54 et qui est en appui contre la partie d'extrémité 30, 32 respective de la barre correspondante.

En variante, les lamelles flexibles 50 sont collées dans l'évidement 54 et ne nécessitent pas de précontrainte en l'absence des barres 28. Dans ce cas, en l'absence des barres 28, les lamelles 50 sont hors contact des parois radiales 58.

En complément, les moyens de liaison 36, 38 comprennent au moins une butée 62 adaptée pour limiter un déplacement radial de la partie d'extrémité 30, 32 sous la force centrifuge Fc lorsque le rotor 16 est entraîné en rotation, afin de limiter l'écrasement des lamelles flexibles 50, tout en limitant la flexion et contrainte associée sous force centrifuge de la barre 28. Cette butée 62 est, par exemple, formée par une surface de la couronne de court-circuit 24, 26, dont la normale est dirigée radialement vers l'intérieur. En l'occurrence, la butée 62 est formée par une paroi 64 adjacente à la paroi 58.

Ainsi, les moyens de liaison 36, 38, comportant les lamelles flexibles 50 électriquement conductrices, permettent d'assurer un contact électrique entre la partie d'extrémité 30, 32 de la barre conductrice 28 et la couronne de court-circuit 24, 26 correspondantes, quel que soit le mode de fonctionnement de la machine électrique 10, y compris lorsque le rotor 16 n'est pas entraîné en rotation, ou à faible vitesse de rotation.

Lorsque le rotor 16 n'est pas entraîné en rotation, la partie d'extrémité 30, 32 de la barre conductrice est en appui contre les lamelles flexibles 50, plus précisément contre la partie centrale 60 des lamelles.

Dans cet état, la partie d'extrémité 30, 32 et la couronne de court-circuit 24, 26 associée forment un jeu J1 (figure 2) permettant un déplacement radialement vers l'extérieur de la partie d'extrémité 30, 32 à l'encontre de la force de certaines lamelles 50.

Ce jeu J1 entre la butée 62 avec sa paroi 64 et la partie d'extrémité 30, 32 comme décrit précédemment, limite le déplacement radial de la partie d'extrémité 30, 32 sous la forme centrifuge Fc, limitant ainsi les contraintes dans la barre 28 et les lamelles 50.

La mobilité en rotation des lamelles 50 autour de l'axe de pivot R permet d'améliorer encore le contact électrique entre la partie d'extrémité 30, 32 de la barre conductrice et la couronne de court-circuit 24, 26.

En complément, dans l'exemple de réalisation des figures 3 et 4, les lamelles flexibles 50 d'un moyen de liaison 36, 38 respectif sont réparties en un premier ensemble 70A et un deuxième ensemble 70B, les lamelles du premier ensemble 70A étant reliées entre elles par une première bande de maintien 52A et les lamelles du deuxième ensemble 70B étant reliées entre elles par une deuxième bande de maintien 52B.

Dans l'exemple de réalisation des figures 3 et 4, les lamelles 50 du premier ensemble 70A sont mobiles en rotation autour de leur axe de pivot R selon un premier sens S1 lorsqu'elles sont pressées entre la partie d'extrémité 30, 32 de la barre conductrice et la couronne de court-circuit 24, 26 correspondantes. Les lamelles 50 du deuxième ensemble 70B sont mobiles en rotation autour de leur axe de pivot R selon un deuxième sens S2 lorsqu'elles sont pressées entre la partie d'extrémité 30, 32 de la barre conductrice et la couronne de court-circuit 24, 26 correspondantes, le deuxième sens S2 étant opposé au premier sens S1.

La répartition des lamelles flexibles 50 d'un moyen de liaison 36, 38 correspondant en deux ensembles 70A, 70B permet de faciliter l'insertion desdites lamelles 50 entre la partie d'extrémité 30, 32 de la barre conductrice et la couronne de court-circuit 24, 26 correspondantes.

En outre, l'agencement particulier des deux ensembles 70A, 70B, de sorte que les lamelles 50 des deux ensembles soient mobiles en rotation autour de leur axe de pivot R selon des sens S1, S2 opposés d'un ensemble à l'autre, permet d'améliorer encore le contact électrique entre la partie d'extrémité 30, 32 de la barre conductrice et la couronne de court-circuit 24, 26 correspondante. En effet, lorsque la vitesse de rotation du rotor 16 augmente et que la force centrifuge Fc s'accroît, les lamelles 50 du premier ensemble 70A sont autant précontraintes que les lamelles 50 du deuxième ensemble 70B.

Si le sens S1 par exemple avait été choisi pour toutes les lamelles 50 d'un seul ensemble 70 disposé le long de sensiblement toute la périphérie de la partie d'extrémité 30, 32 de la barre conductrice, une majorité des lamelles 50 d'une partie seulement de la périphérie aurait été plus en appui sur la partie d'extrémité 30, 32 par l'effet de la force centrifuge Fc (partie à gauche sur la figure 3), améliorant ainsi la qualité de la pression de contact pour un meilleur passage de courant électrique. En revanche, l'autre partie des lamelles 50 sensiblement diamétralement opposée à la première partie aurait été moins en appui sur la partie d'extrémité 30, 32 par l'effet de la force centrifuge Fc qui diminue la force de précontrainte initiale des lamelles 50 lors de leur assemblage initial dans le moyen de liaison 36, 38.

Autrement dit, cet agencement particulier de deux ensembles 70A, 70B permet d'avoir un contact électrique entre la partie d'extrémité 30, 32 de la barre conductrice et la couronne de court-circuit 24, 26 correspondantes qui soit moins dépendant de la vitesse de rotation du rotor 16 et de la force centrifuge Fc associée, et sensiblement de même qualité (pression de contact électrique) sur le long de sensiblement toute la périphérie de la partie d'extrémité 30, 32 de la barre conductrice 28.

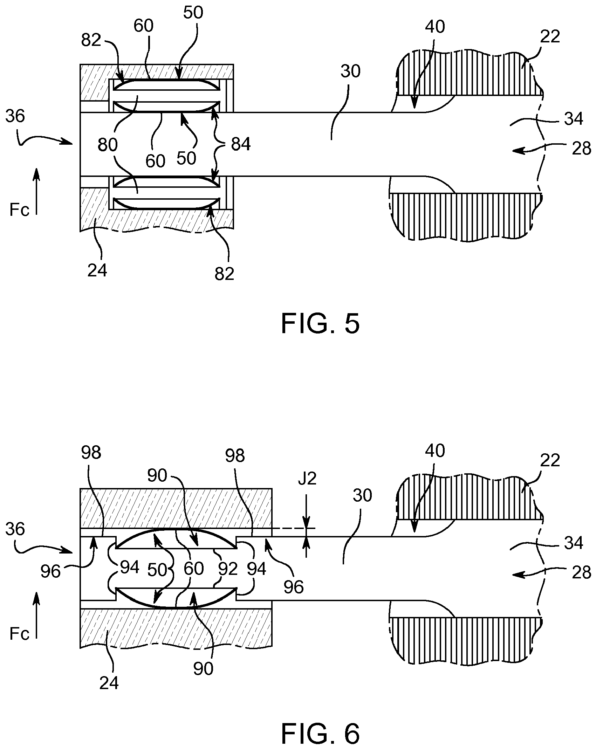

La figure 5 illustre un deuxième mode de réalisation de l'invention pour lequel les éléments identiques au premier mode de réalisation, décrit précédemment, sont repérés par des références identiques, et ne sont pas décrits à nouveau. Par exemple, la butée 62 et sa paroi 64 sont aussi présents dans ce deuxième mode de réalisation, en regard de l'extrémité de la partie d'extrémité 30, 32 (tout à gauche sur la figure 5).

Selon ce deuxième mode de réalisation, au moins un moyen de liaison 36, 38 comporte une douille 80, un premier groupe 82 de lamelles flexibles et un deuxième groupe 84 de lamelles flexibles, les lamelles 50 étant électriquement conductrices et solidaires de la douille 80. Le premier groupe de lamelles 82 est reçu à la périphérie extérieure de la douille 80 et en appui contre la couronne de court-circuit 24, 26 respective, et le deuxième groupe de lamelles 84 est reçu à la périphérie intérieure de la douille 80 et en appui contre la partie d'extrémité 30, 32 respective de la barre 28 correspondante.

La douille 80 présente, selon le plan transversal à l'axe de rotation X-X', une section de forme sensiblement identique à celle de la section de la partie extrémité 30, 32 selon le dit plan transversal.

La douille 80 est, par exemple, en forme d'un cylindre lorsque la partie d'extrémité 30, 32 correspondante présente une section sensiblement circulaire.

En complément non représenté, au moins deux premiers groupes 82 de lamelles sont reçus à la périphérie extérieure de la douille 80 et en appui contre la couronne de court-circuit 24, 26, les premiers groupes 82 étant agencés successivement suivant l'axe de pivot R sensiblement parallèle à l'axe de rotation X-X'. La douille 80 comporte alors une partie intermédiaire s'étendant dans un plan sensiblement perpendiculaire à l'axe de pivot R et disposée entre deux premiers groupes 82 successifs. Autrement dit, le moyen de liaison 36, 38 comporte alors plusieurs rangées de lamelles 50 extérieures à la douille 80 et disposées successivement suivant l'axe de pivot R.

En complément non représenté et de manière analogue, au moins deux deuxièmes groupes 84 de lamelles sont reçus à la périphérie intérieure de la douille 80 et en appui contre la partie d'extrémité 30, 32 respective de la barre 28 correspondante, les deuxièmes groupes 84 étant agencés successivement suivant l'axe de pivot R sensiblement parallèle à l'axe de rotation X-X'. Le nombre de deuxièmes groupes 84 est de préférence égal à 2 ou 3. La douille 80 comporte alors une partie intermédiaire s'étendant dans un plan sensiblement perpendiculaire à l'axe de pivot R et disposée entre deux deuxièmes groupes 84 successifs. Autrement dit, le moyen de liaison 36, 38 comporte alors plusieurs rangées de lamelles 50 intérieures à la douille 80 et disposées successivement suivant l'axe de pivot R.

Le nombre de premier(s) groupe(s) 82 n'est pas nécessairement égal au nombre de deuxième(s) groupe(s) 84. Le moyen de liaison 36, 38 comporte par exemple un seul premier groupe 82 et deux deuxièmes groupes 84, et le moyen de liaison 36, 38 est par exemple propre à permettre la circulation d'un courant de 2000 A. Selon un autre exemple indicatif, le moyen de liaison 36, 38 comporte deux premiers groupes 82 et trois deuxièmes groupes 84, et le moyen de liaison 36, 38 est par exemple propre à permettre la circulation d'un courant de 3000 A. L'homme du métier comprendra bien entendu que les valeurs de courant précitées et données à titre indicatif dépendent non seulement du nombre de premier(s) groupe(s) 82 et de deuxième(s) groupe(s) 84, mais également des dimensions des lamelles flexibles 50 de chacun des groupes 82, 84.

Le fonctionnement de la machine électrique 10 selon le deuxième mode de réalisation est identique à celui du premier mode de réalisation, et n'est pas décrit à nouveau.

Les avantages de la machine électrique 10, en particulier des moyens de liaison 36, 38, selon le deuxième mode de réalisation sont analogues à ceux du premier mode de réalisation. Les moyens de liaison 36, 38 selon ce deuxième de réalisation permettent en outre de disposer plusieurs rangées de lamelles flexibles 50 successivement suivant l'axe de pivot R sensiblement parallèle à l'axe de rotation X-X' et d'augmenter alors la valeur maximale du courant susceptible de passer à travers le moyen de liaison 36, 38. Les moyens de liaison 36, 38 selon ce deuxième mode de réalisation permettent également de faciliter l'assemblage dudit moyen de liaison 36, 38 entre la couronne de court-circuit 24, 26 et la partie d'extrémité 30, 32 respective de la barre 28 correspondante.

En variante, la fonction de butée 62 limitant le déplacement radial sous la force centrifuge Fc de la partie d'extrémité 30, 32 est intégrée dans la douille 80.

La figure 6 illustre un troisième mode de réalisation de l'invention pour lequel les éléments identiques au premier mode de réalisation, décrit précédemment, sont repérés par des références identiques, et ne sont pas décrits à nouveau.

Selon ce troisième mode de réalisation, les lamelles flexibles 50 d'un moyen de liaison 36, 38 respectif sont reçues dans un évidement 90 agencé dans la partie d'extrémité 30, 32 respective de la barre 28 correspondante et en appui contre la couronne de court-circuit 24, 26 respective.

L'évidement 90 comporte un fond 92 et deux parois radiales 94. Les lamelles flexibles 50 sont maintenues dans l'évidement 90 par exemple avec précontrainte en s'appliquant sur les parois radiales 94. A l'état non sollicité des lamelles 50, leur partie centrale 60 s'étend en dehors de l'évidement 90, et est en appui contre la couronne de court-circuit 24, 26 correspondante.

En variante, les lamelles flexibles 50 sont collées dans l'évidement 90 et ne nécessitent pas de précontrainte en l'absence de la couronne de court-circuit 24, 26. Dans ce cas, en l'absence de la couronne de court-circuit 24, 26, les lamelles 50 sont hors contact des parois radiales 94.

En complément, les moyens de liaison 36, 38 comprennent au moins une butée 96 adaptée pour limiter un déplacement radial de la partie d'extrémité 30, 32 sous la force centrifuge Fc lorsque le rotor 16 est entraîné en rotation, afin de limiter l'écrasement des lamelles flexibles 50, tout en limitant la flexion et contrainte associée sous force centrifuge de la barre 28. Cette butée 96 est, par exemple, formée par une surface de la partie d'extrémité 30, 32, dont la normale est dirigée radialement vers l'intérieur. En l'occurrence, la butée 96 est formée par une paroi 98 adjacente à la paroi radiale 94.

Ainsi, les moyens de liaison 36, 38, comportant les lamelles flexibles 50 électriquement conductrices, permettent d'assurer un contact électrique entre la partie d'extrémité 30, 32 de la barre conductrice 28 et la couronne de court-circuit 24, 26 correspondantes quel que soit le mode de fonctionnement de la machine électrique 10, y compris lorsque le rotor 16 n'est pas entraîné en rotation, ou à faible vitesse de rotation.

Lorsque le rotor 16 n'est pas entraîné en rotation, la couronne de court-circuit 24, 26 correspondante est en appui contre les lamelles flexibles 50, plus précisément contre la partie centrale 60 des lamelles.

Dans cet état, la partie d'extrémité 30, 32 et la couronne de court-circuit 24, 26 associée forment un jeu J2 (figure 6) permettant un déplacement radialement vers l'extérieur de la partie d'extrémité 30, 32 à l'encontre de la force de certaines lamelles 50. Le Jeu J2, comme le jeu J1 du premier mode de réalisation, entre la butée 96 avec sa paroi 98 et la couronne de court-circuit 24, 26 limite le déplacement radial de la partie d'extrémité 30, 32 sous la force centrifuge Fc, limitant ainsi les contraintes dans la barre 28 et les lamelles 50.

On conçoit ainsi que le rotor 16 de la machine électrique 10 selon invention permet d'améliorer le contact électrique entre les barres conductrices 28 et les couronnes 24, 26 de la cage de court-circuit 20, et ceci pour une très grande plage de vitesses de rotation du rotor 16, allant de l'arrêt à de très hautes vitesses de rotation, par exemple de 3000 tours par minutes à 20 000 tours par minute.

## Revendications

1. Rotor (16) de machine électrique (10), s'étendant selon un axe de rotation (X-X') et comprenant une cage de court-circuit (20) ayant au moins une barre (28) et au moins une première couronne (24) de court-circuit électrique, la ou chaque barre (28) ayant une première partie d'extrémité (30), la première partie d'extrémité (30) étant liée à la première couronne de court-circuit (24) électriquement par un premier moyen de liaison (36) et radialement par rapport à l'axe de rotation (X-X'), le rotor (16) comprenant
- le ou chaque premier moyen de liaison (36) entre une première partie d'extrémité (30) respective et la première couronne de court-circuit (24) comporte une pluralité de lamelles flexibles (50) électriquement conductrices ;
- la cage de court-circuit (20) comporte une seconde couronne (26) de court-circuit électrique, la ou chaque barre (28) ayant une seconde partie d'extrémité (32), la seconde partie d'extrémité (32) étant liée à la seconde couronne de court-circuit (26) électriquement par un second moyen de liaison (38) et radialement par rapport à l'axe de rotation (X-X'), le ou chaque second moyen de liaison (38) entre une seconde partie d'extrémité (32) respective et la seconde couronne de court-circuit (26) comportant également une pluralité de lamelles flexibles (50) électriquement conductrices ;
- les lamelles flexibles (50) d'un moyen de liaison (36, 38) respectif sont disposées le long d'au moins la moitié de la périphérie, selon un plan transversal perpendiculaire à l'axe de rotation (X-X'), de la partie d'extrémité (30, 32) correspondante, **caractérisé en ce que**:
- les lamelles flexibles (50) d'un moyen de liaison (36, 38) respectif sont mécaniquement et électriquement reliées entre elles par au moins une bande de maintien (52).

2. Rotor (16) selon la revendication 1, dans lequel les lamelles flexibles (50) d'un moyen de liaison (36, 38) respectif sont disposées le long d'au moins trois-quarts de la périphérie suivant le plan transversal de ladite partie d'extrémité (30, 32), de préférence le long de sensiblement toute la périphérie suivant le plan transversal de ladite partie d'extrémité (30, 32).

3. Rotor (16) selon la revendication 1 ou 2, dans lequel chaque lamelle flexible (50) est mobile en rotation autour d'un axe de pivot (R) sensiblement parallèle à l'axe de rotation (X-X').

4. Rotor (16) selon l'une quelconque des revendications 1 à 3, dans lequel les lamelles flexibles (50) d'un moyen de liaison (36, 38) respectif sont réparties en un premier ensemble (70A) et un deuxième ensemble (70B), les lamelles du premier ensemble (70A) étant reliées entre elles par une première bande de maintien (52A) et les lamelles du deuxième ensemble (70B) étant reliées entre elles par une deuxième bande de maintien (52B).

5. Rotor (16) selon les revendications 3 et 4 prises ensemble, dans lequel les lamelles du premier ensemble (70A) sont mobiles en rotation autour de leur axe de pivot (R) selon un premier sens (S1), et les lamelles du deuxième ensemble (70B) sont mobiles en rotation autour de leur axe de pivot (R) selon un deuxième sens (S2) opposé au premier sens (S1).

6. Rotor (16) selon l'une quelconque des revendications précédentes, dans lequel au moins un moyen de liaison (36, 38) comporte une douille (80) et au moins deux groupes (82, 84) de lamelles flexibles (50), électriquement conductrices et solidaires de la douille (80), au moins un premier groupe de lamelles (82) étant reçu à la périphérie extérieure de la douille (80) et en appui contre la couronne de court-circuit (24, 26) respective, et au moins un deuxième groupe de lamelles (84) étant reçu à la périphérie intérieure de la douille (80) et en appui contre la partie d'extrémité (30, 32) respective de la barre (28) correspondante.

7. Rotor (16) selon l'une quelconque des revendications 1 à 5, dans lequel les lamelles flexibles (50) d'un moyen de liaison (36, 38) respectif sont reçues dans un évidement (54) agencé dans la couronne de court-circuit (24, 26) respective et en appui contre la partie d'extrémité (30, 32) respective de la barre correspondante.

8. Rotor (16) selon l'une quelconque des revendications 1 à 5, dans lequel les lamelles flexibles (50) d'un moyen de liaison (36, 38) respectif sont reçues dans un évidement (90) agencé dans la partie d'extrémité (30, 32) respective de la barre (28) correspondante et en appui contre la couronne de court-circuit (24, 26) respective.

9. Machine électrique, en particulier machine asynchrone, notamment moteur, comprenant un stator et un rotor (16), **caractérisée en ce que** le rotor (16) est un rotor selon l'une quelconque des revendications précédentes.

## Patentansprüche

1. Rotor (16) einer elektrischen Maschine (10), der sich entlang einer Rotationsachse (X-X') erstreckt und einen Kurzschlusskäfig (20) umfasst, der mindestens einen Stab (28) und mindestens einen ersten Kranz (24) für elektrischen Kurzschluss aufweist, wobei der oder jeder Stab (28) einen ersten Endabschnitt (30) aufweist, wobei der erste Endabschnitt (30) mit dem ersten Kurzschlusskranz (24) elektrisch durch ein erstes Verbindungsmittel (36) verbunden ist und radial in Bezug auf die Rotationsachse (X-X'), wobei der Rotor (16) umfasst:
- das oder jedes erste Verbindungsmittel (36) zwischen einem jeweiligen ersten Endabschnitt (30), und dem ersten Kurzschlusskranz (24) umfasst eine Vielzahl von elektrisch leitenden flexiblen Lamellen (50) enthält;
- den Kurzschlusskäfig (20), einen zweiten Kranz (26) für elektrischen Kurzschluss enthaltend, wobei der oder jeder Stab (28) einen zweiten Endabschnitt (32) aufweist, wobei der zweite Endabschnitt (32) mit dem zweiten Kurzschlusskranz (26) elektrisch durch ein zweites Verbindungsmittel (38) verbunden ist und radial in Bezug auf die Rotationsachse (X-X'), wobei das oder jedes zweite Verbindungsmittel (38) zwischen einem jeweiligen zweiten Endabschnitt (32) und dem zweiten Kurzschlusskranz (26) ebenfalls eine Vielzahl von elektrisch leitenden flexiblen Lamellen (50) umfasst;
- die flexiblen Lamellen (50) eines jeweiligen Verbindungsmittels (36, 38), die entlang mindestens der Hälfte des Umfangs in einer Querebene senkrecht zur Rotationsachse (X-X') des entsprechenden Endabschnitts (30, 32) angeordnet sind, **dadurch gekennzeichnet, dass**:
- die flexiblen Lamellen (50) eines jeweiligen Verbindungsmittels (36, 38) mechanisch und elektrisch durch mindestens ein Halteband (52) miteinander verbunden sind.

2. Rotor (16) nach Anspruch 1, wobei die flexiblen Lamellen (50) eines jeweiligen Verbindungsmittels (36, 38) entlang von mindestens drei Vierteln des Umfangs angeordnet sind, der Querebene des Endabschnitts (30, 32) folgend, vorzugsweise im Wesentlichen entlang des gesamten Umfangs, der Querebene des Endabschnitts (30, 32) folgend.

3. Rotor (16) nach Anspruch 1 oder 2, wobei jede flexible Lamelle (50) in Rotation um eine Schwenkachse (R) beweglich ist, die im Wesentlichen parallel zur Rotationsachse (X-X') ist.

4. Rotor (16) nach einem der Ansprüche 1 bis 3, wobei die flexiblen Lamellen (50) eines jeweiligen Verbindungsmittels (36, 38) in eine erste Baugruppe (70A) und eine zweite Baugruppe (70B) unterteilt sind, wobei die Lamellen der ersten Baugruppe (70A) durch ein erstes Halteband (52A) miteinander verbunden sind und die Lamellen der zweiten Baugruppe (70B) durch ein zweites Halteband (52B) miteinander verbunden sind.

5. Rotor (16) nach Anspruch 3 und 4 zusammengenommen, wobei die Lamellen der ersten Baugruppe (70A) in einer ersten Richtung (S1) um ihre Schwenkachse (R) in Rotation beweglich sind, und die Lamellen der zweiten Baugruppe (70B) in einer zweiten Richtung (S2), die der ersten Richtung (S1) entgegengesetzt ist, um ihre Schwenkachse (R) in Rotation beweglich sind.

6. Rotor (16) nach einem der vorhergehenden Ansprüche, wobei mindestens ein Verbindungsmittel (36, 38) eine Hülse (80) enthält und mindestens zwei Gruppen (82, 84) von flexiblen Lamellen (50), die elektrisch leitend und mit der Hülse (80) fest verbunden sind, wobei mindestens eine erste Gruppe von Lamellen (82) am äußeren Umfang der Hülse (80) aufgenommen und gegen den jeweiligen Kurzschlusskranz (24, 26) abgestützt ist, und mindestens eine zweite Gruppe von Lamellen (84) am inneren Umfang der Hülse (80) aufgenommen und gegen den jeweiligen Endabschnitt (30, 32) des entsprechenden Stabes (28) abgestützt ist.

7. Rotor (16) nach einem der Ansprüche 1 bis 5, wobei die flexiblen Lamellen (50) eines jeweiligen Verbindungsmittels (36, 38) in einer Aussparung (54) aufgenommen werden, die im jeweiligen Kurzschlusskranz (24, 26) eingerichtet ist, und gegen den jeweiligen Endabschnitt (30, 32) des entsprechenden Stabes abgestützt sind.

8. Rotor (16) nach einem der Ansprüche 1 bis 5, wobei die flexiblen Lamellen (50) eines jeweiligen Verbindungsmittels (36, 38) in einer Aussparung (90) aufgenommen werden, die im jeweiligen Endabschnitt (30, 32) des entsprechenden Stabes (28) eingerichtet ist, und gegen den jeweiligen Kurzschlusskranz (24, 26) abgestützt sind.

9. Elektrische Maschine, insbesondere eine Asynchronmaschine, besonders ein Motor, der einen Stator und einen Rotor (16) umfasst, **dadurch gekennzeichnet, dass** der Rotor (16) ein Rotor nach einem der vorhergehenden Ansprüche ist.

## Claims

1. A rotor (16) of an electric machine (10), extending along an axis of rotation (X-X') and comprising a short-circuit cage (20) having at least one bar (28) and at least one first electrical short-circuit ring (24), the or each bar (28) having a first end portion (30), the first end portion (30) being connected electrically to the first short-circuit ring (24) by a first connection means (36) and radially relative to the axis of rotation (X-X'), the rotor (16) comprising:
- the or each first connection means (36) between a first respective end portion (30) and the first short-circuit ring (24) includes a plurality of flexible, electrically conductive strips (50);
- the short-circuit cage (20) includes a second electrical short-circuit ring (26), the or each bar (28) having a second end portion (32), the second end portion (32) being connected electrically to the second short-circuit ring (26) by a second connection means (38) and radially relative to the axis of rotation (X-X'), the or each second connection means (38) between a respective second end portion (32) and the second short-circuit ring (26) also including a plurality of electrically conductive flexible strips (50);
- the flexible strips (50) of a respective connection means (36, 38) are disposed along at least half of the periphery, in a transverse plane perpendicular to the axis of rotation (X-X'), of the corresponding end portion (30, 32), **characterised in that**:
- the flexible strips (50) of a respective connection means (36, 38) are mechanically and electrically connected together by at least one holding strip (52).

2. The rotor (16) according to claim 1, wherein the flexible strips (50) of a respective connection means (36, 38) are disposed along at least three-quarters of the periphery along the transverse plane of said end portion (30, 32), preferably along substantially the entire periphery along the transverse plane of said end portion (30, 32).

3. The rotor (16) according to claim 1 or 2, wherein each flexible strip (50) is movable in rotation around a pivot axis (R) substantially parallel to the axis of rotation (X-X') .

4. The rotor (16) according to any one of claims 1 to 3, wherein the flexible strips (50) of a respective connection means (36, 38) are distributed into a first set (70A) and a second set (70B), the strips of the first set (70A) being connected together by a first holding strip (52A) and the strips of the second set (70B) being connected together by a second holding strip (52B).

5. The rotor (16) according to claims 3 and 4 taken together, wherein the strips of the first set (70A) are movable in rotation around their pivot axis (R) in a first direction (S1), and the strips of the second set (70B) are movable in rotation around their pivot axis (R) in a second direction (S2) opposite to the first direction (S1).

6. The rotor (16) according to any one of the preceding claims, wherein at least one connection means (36, 38) includes a socket (80) and at least two groups (82, 84) of flexible strips (50), which are electrically conductive and integral with the socket (80), at least a first group of strips (82) being received at the outer periphery of the socket (80) and bearing against the respective short-circuit ring (24, 26), and at least a second group of strips (84) being received at the inner periphery of the socket (80) and bearing against the respective end portion (30, 32) of the corresponding bar (28).

7. The rotor (16) according to any one of claims 1 to 5, wherein the flexible strips (50) of a respective connection means (36, 38) are received in a recess (54) arranged in the respective short circuit crown (24, 26) and bearing against the respective end portion (30, 32) of the corresponding bar.

8. The rotor (16) according to any one of claims 1 to 5, wherein the flexible strips (50) of a respective connection means (36, 38) are received in a recess (90) arranged in the respective end portion (30, 32) of the corresponding bar (28) and bearing against the respective short-circuit ring (24, 26).

9. An electric machine, particularly an asynchronous machine, in particular a motor, comprising a stator and a rotor (16), **characterised in that** the rotor (16) is a rotor according to any one of the preceding claims.
